# EUROPEAN PATENT SPECIFICATION

(11) **EP 2 141 015 B1**
(45) Date of publication and mention of the grant of the patent: **01.08.2012**
(21) Application number: 09251679.8
(22) Date of filing: 30.06.2009
(51) Int. Cl.: B32B 27/00, B32B 27/06, B32B 27/12, F16J 15/00, C09J 7/02

(54) **Gasket material**
Dichtungsmaterial
Matériau de joint

(30) Priority: 30.06.2008 US 129475 P
(43) Date of publication of application: 06.01.2010
(73) Proprietor: Nitto Denko Corporation, Ibaraki-shi Osaka 567-8680 (JP)
(72) Inventor: Banba, Tomohide, Ibaraki-shi, Osaka 567-8680 (JP); Inoue, Shinichi, Ibaraki-shi, Osaka 567-8680 (JP); Yakuwa, Shinpei, Ibaraki-shi, Osaka 567-8680 (JP); Tanimura, Miki, Ibaraki-shi, Osaka 567-8680 (JP)
(74) Representative: Duckworth, Timothy John

(56) References cited:
- US-A1- 2004 070 156
- DATABASE WPI Week 200110 Thomson Scientific, London, GB; AN 2001-084562 XP002617833, & JP 2000 302981 A (KANEKA CORP) 31 October 2000 (2000-10-31)
- DATABASE WPI Week 200453 Thomson Scientific, London, GB; AN 2004-547736 XP002617834, & JP 2004 204180 A (KANEKA CORP) 22 July 2004 (2004-07-22)

## Description

### TECHNICAL FIELD OF THE INVENTION

The present invention relates to a gasket material. More particularly, the present invention relates to a gasket material to be placed between two opposing faces to provide a tight closure between them.

### BACKGROUND OF THE INVENTION

Conventionally, to prevent seepage of liquid or gas between two opposing faces (e.g., opposing faces of two plate-like members in a laminate of plate-like members) in various machines and apparatuses or other structures, a gasket is set between the two opposing faces.

For example, an antenna to aid communication between aircrafts and distant places is set on the outer surface of the body wall (outer board) of the aircrafts. Many of such antennas have a plate-like fixing board having an electric connector protruding from one surface thereof. The surface of the fixing board having the protruding electric connector is superposed on the outer face of the outer board, the connector is inserted into the inside of an aircraft from the hole formed on the outer board of the aircraft, and connected to an appropriate electric circuit in the aircraft. In this case, the fixing board of the antenna is generally installed removably with a screw on the outer board of the aircraft, where a gasket is set between the outer face of the outer board and the inner face of the antenna fixing board to seal the antenna fixing board.

To be specific, a screw hole is formed at the corresponding positions of the antenna fixing board and the outer board of an aircraft, a gasket having a through-hole formed at a position corresponding to the screw hole in the antenna fixing board and the outer board of the aircraft is placed between them, a screw is inserted from the outside of the antenna fixing board into the through-hole of the antenna fixing board, the gasket and the outer board of the aircraft, and a blind nut is set on the inner face of the outer board of the aircraft, whereby the antenna is fixed. In so doing, the gasket is compressed by the deformation of the fixing board due to screwing, which in turn provides a seal of the screw and the screw pore, as well as the outer board of the aircraft and the fixing board. Consequently, penetration of moisture into the aircraft can be prevented.

As a gasket used for sealing such an antenna fixing member on the outer board of an aircraft, for example, US2004/0070156A1 proposes a gasket material wherein an adhesive layer of a flexible polyurethane gel is formed on both the front and the back of a carrier sheet (substrate sheet). This publication describes that a gasket having an adhesive layer of a polyurethane gel maintains superior sealing property, since polyurethane gel is superior in the flexibility, elasticity, compaction property, flexibility and the like, and nonreactive with the constituent materials (specifically aluminum etc.) of the outer board of aircrafts and antenna fixing board, and water (including brine).

A gasket material of the above-mentioned type is generally formed to show high adhesiveness (adhesion force) to an adherend such as the outer board of aircrafts and the like, so as to ensure sealing property. However, when a gasket material is removed during maintenance of aircrafts and the like, working troubles have sometimes been experienced, since cohesive failure occurs in the gasket material, and residues of the adhesive layer and the like remaining on the adherend need to be removed.

### SUMMARY OF THE INVENTION

The present invention has been made in view of such situation, and aims to provide a gasket material superior in removal from the adherend during maintenance and the like while ensuring practically sufficient sealing property (adhesion), and a seal structure using the gasket material.

The present inventors have conducted intensive studies in an attempt to solve the aforementioned problems and found that a cured product obtained by reacting a polyoxyalkylene polymer having at least one alkenyl group in each molecule with a compound containing two or more hydrosilyl groups on average in each molecule is superior in elasticity and compaction property, shows superior adhesion to the surface of various materials, does not cause cohesive failure during removal and is superior in removability, based on which finding they have completed the present invention.

Accordingly, the present invention provides the following.
(1) A gasket material comprising a substrate sheet and an adhesive layer formed on both faces of said sheet, wherein said adhesive layer is comprised of a cured product of a composition containing the following components A to C:
   A: a polyoxyalkylene polymer having at least one alkenyl group in each molecule
   B: a compound containing two or more hydrosilyl groups on average in each molecule
   C: a hydrosilylation catalyst.
(2) The gasket material of the above-mentioned (1), wherein the substrate sheet is a glass fiber sheet.
(3) The gasket material of the above-mentioned (2), wherein the glass fiber sheet is a glass cloth.
(4) The gasket material of the above-mentioned (1), wherein the substrate sheet is a plastic film.
(5) The gasket material of the above-mentioned (1), wherein the substrate sheet is a non-porous plastic film.
(6) The gasket material of the above-mentioned (1), further comprising a release sheet laminated on at least one of the adhesive layers formed on both faces of the substrate sheet.
(7) The gasket material of the above-mentioned (6), wherein the release sheet is treated with a cation polymerizable ultraviolet curable silicone release agent containing cation polymerizable silicone and an onium salt photoinitiator.
(8) The gasket material of the above-mentioned (1), which is placed between two opposing faces.
(9) The gasket material of the above-mentioned (2), which is placed between two opposing faces.
(10) The gasket material of the above-mentioned (3), which is placed between two opposing faces.
(11) The gasket material of the above-mentioned (4), which is placed between two opposing faces.
(12) The gasket material of the above-mentioned (5), which is placed between two opposing faces.
(13) A seal structure comprising the gasket material of the above-mentioned (1) placed between two opposing faces.
(14) A seal structure comprising the gasket material of the above-mentioned (2) placed between two opposing faces.
(15) A seal structure comprising the gasket material of the above-mentioned (3) placed between two opposing faces.
(16) A seal structure comprising the gasket material of the above-mentioned (4) placed between two opposing faces.
(17) A seal structure comprising the gasket material of the above-mentioned (5) placed between two opposing faces.

The gasket material of the above-mentioned (1) of the present invention, which has an adhesive layer comprised of a cured product of a particular composition, is superior in elasticity and compaction property, shows superior adhesion to various materials, does not cause cohesive failure during detachment and is superior in removability. Therefore, by sandwiching the gasket material of the present invention between two opposing faces, a superior sealing effect lasts for a long time, the gasket material can be removed without leaving residues of the adhesive layer on an adherend after removal, and workability including removal of the gasket material can be improved.

### BRIEF DESCRIPTION OF THE DRAWING

Fig. 1 is a schematic diagram of a cross-section of a typical embodiment of the gasket material of the present invention.
Fig. 2 is a side view of the gasket material of the present invention in the form of a roll.
Fig. 3 is a schematic diagram of a cross-section of another embodiment of the gasket material of the present invention.
Figs. 4A-4F are schematic diagrams showing the production step of the gasket material of the present invention.

In the Figures, 1 is a substrate sheet, 2 and 3 are each an adhesive layer, 4 is a release sheet, 5 is a composition containing components A to C, 100 and 100 are gasket materials, and 200 is a gasket material in the form of a roll.

### DETAILED DESCRIPTION OF THE INVENTION

The present invention is explained in the following by referring to a preferable embodiment.

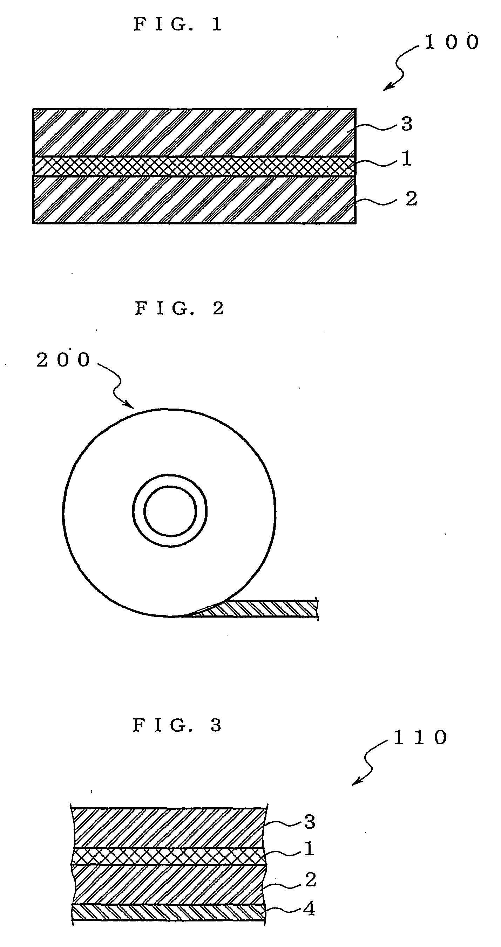

Fig. 1 is a schematic diagram of a cross-section of a typical embodiment of the gasket material of the present invention. The gasket material of the present invention is mainly characterized by, as shown in one embodiment of a gasket material 100, adhesive layers 2, 3 on both faces of a substrate sheet 1, which are comprised of a cured product of a composition containing the following components A to C :
   A: a polyoxyalkylene polymer having at least one alkenyl group in each molecule
   B: a compound containing two or more hydrosilyl groups on average in each molecule
   C: a hydrosilylation catalyst.

In the present invention, the above-mentioned "polyoxyalkylene polymer having at least one alkenyl group in each molecule" for component A is not particularly limited, and various polymers can be used. However, one wherein the main chain of the polymer has a repeat unit represented by the formula (1) shown below is preferable:

formula (1):-R¹-O-

wherein R¹ is an alkylene group.

R¹ is preferably a linear or branched alkylene group having 1 to 14, more preferably 2 to 4, carbon atoms.

As specific examples of the repeat unit represented by the general formula (1), -CH₂O-, -CH₂CH₂O-, -CH₂CH(CH₃)O-, -CH₂CH(C₂H₅)O-, -CH₂C(CH₃)₂O-, -CH₂CH₂CH₂CH₂O- and the like can be included. The main chain skeleton of the polyoxyalkylene polymer may consist of only one kind of repeat unit, and may consist of two kinds or more of repeat units. Particularly, from the aspects of availability and workability, a polymer having -CH₂CH(CH₃)O- as a main repeat unit is preferable. In the main chain of the polymer, a repeat unit other than the oxyalkylene group may be contained. In this case, the total sum of oxyalkylene units in the polymer is preferably not less than 80% by weight, particularly preferably not less than 90% by weight.

Although the polymer of component A may be a linear polymer or a branched polymer, or a mixture thereof, it preferably contains a linear polymer in a proportion of not less than 50% by weight, so that the adhesive layer will show good adhesiveness to the surface of various materials.

The molecular weight of the polymer of component A is preferably 500 to 50,000, more preferably 5,000 to 30,000, in terms of number-average molecular weight. When the number average molecular weight is less than 500, the obtained cured product tends to be too brittle, and when the number average molecular weight exceeds 50,000, the viscosity becomes unfavorably too high to markedly decrease workability. The number average molecular weight here means the value obtained by Gel Permeation Chromatography (GPC) method.

The polymer of component A preferably has a narrow molecular weight distribution wherein the ratio of weight-average molecular weight and number-average molecular weight (Mw/Mn) is not more than 1.6; a polymer having an Mw/Mn of not more than 1.6 produces a decreased viscosity of the composition and offers improved workability. Hence, the Mw/Mn is more preferably not more than 1.5, still more preferably not more than 1.4. As mentioned herein, Mw/Mn refers to a value obtained by the gel permeation chromatography (GPC) method.

Here, the molecular weight (based on polystyrene) is measured by the GPC method using GPC apparatus (HLC-8120GPC) manufactured by Tosoh Corporation, where the measurement conditions are as follows.
sample concentration: 0.2 wt% (THF solution)
sample injection volume: 10 µl
eluent: THF
flow rate: 0.6 ml/min
measurement temperature: 40°C
column: sample column TSKgel GMH-H(S)
detector: differential refractometer

With regard to the polymer of component A (polyoxyalkylene polymer having at least one alkenyl group in each molecule), the alkenyl group is not subject to limitation, but an alkenyl group represented by the formula (2) shown below is suitable:

formula (2): H₂C=C(R²)

wherein R² is hydrogen or a methyl group.

The mode of binding of the alkenyl group to the polyoxyalkylene polymer is not subject to limitation; for example, alkenyl group direct bond, ether bond, ester bond, carbonate bond, urethane bond, urea bond and the like can be included.

As specific examples of the polymer of component A, a polymer represented by the general formula (3): {H₂C=C(R^{3a})-R^{4a}-O}a₁R^{5a}
wherein R^{3a} is hydrogen or a methyl group; R^{4a} is a divalent hydrocarbon group having 1 to 20 carbon atoms, optionally having one or more ether groups, R^{5a} is a polyoxyalkylene polymer residue; a₁ is a positive integer,
can be included. As R^{4a} in the formula, specifically, -CH₂-, -CH₂CH₂-, -CH₂CH₂CH₂-, -CH₂CH(CH₃)CH₂-, -CH₂CH₂CH₂CH₂-, -CH₂CH₂OCH₂CH₂-, or -CH₂CH₂OCH₂CH₂CH₂- and the like can be included'; for the ease of synthesis, -CH₂- is preferable.

A polymer having an ester bond, represented by the formula (4): {H₂C=C(R^{3b})-R^{4b}-OCO}a₂R^{5b}
wherein R^{3b}, R^{4b}, R^{5b} and a₂ have the same definitions as those of R^{3a}, R^{4a}, R^{5a}, and a₁, respectively,
can also be included.

A polymer represented by the formula (5): {H₂C=C(R^{3c})}a₃R^{5c} wherein R^{3c}, R^{5c} and a₃ have the same definitions as those of R^{3a}, R^{5a}, and a₁, respectively,
can also be included.

Furthermore, a polymer having a carbonate bond, represented by the formula (6) : {H₂C=C(R^{3d})-R^{4d}-O(CO)O}a₄R^{5d} wherein R^{3d}, R^{4d}, R^{5d} and a₄ have the same definitions as those of R^{3a}, R^{4a}, R^{5a} and a₁, respectively,
can also be included.

It is preferable that at least 1, preferably 1 to 5, more preferably 1.5 to 3, alkenyl groups be present in each molecule of the polymer of component A. If the number of alkenyl groups contained in each molecule of the polymer of component A is less than 1, the curing is insufficient; if the number exceeds 5, the mesh structure becomes so dense that the polymer sometimes fails to exhibit a good adherence. The polymer of component A can be synthesized according to the method described in Japanese Patent Kokai Publication No. 2003-292926, and any commercially available product can be used as is.

Any component B compound containing two or more hydrosilyl groups on average in each molecule can be used without limitation, as long as it has a hydrosilyl group (a group having an Si-H bond), but from the viewpoint of the ease of obtainment of raw materials and compatibility with the component A, an organohydrogen polysiloxane modified with an organic constituent is particularly preferable. The aforementioned polyorganohydrogen siloxane modified with an organic constituent more preferably has an average of 2 to 8 hydrosilyl groups in each molecule. Specific examples of the structure of the polyorganohydrogen siloxane include linear or cyclic ones represented by, for example:

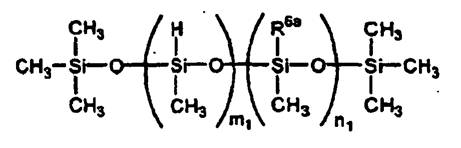

wherein 2≤m₁+n₁≤50, 2≤m₁, and 0≤n₁, R^{6a} is a hydrocarbon group having 2 to 20 carbon atoms in the main chain thereof, optionally comprising one or more phenyl groups,

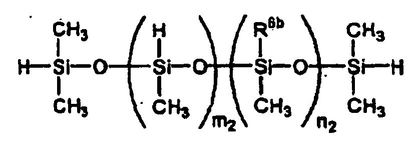

wherein 0≤m₂+n₂≤50, 0≤m₂, and 0≤n₂, R^{6b} is a hydrocarbon group having 2 to 20 carbon atoms in the main chain thereof, optionally comprising one or more phenyl groups,
or

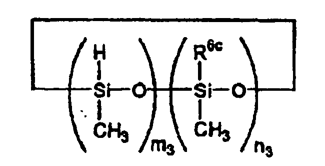

wherein 3≤m₃+n₃≤20, 2≤m₃≤19, and 0≤n₃≤18, R^{6c} is a hydrocarbon group having 2 to 20 carbon atoms in the main chain thereof, optionally having one or more phenyl groups, and the like, and ones having two or more of these units, represented by the following:

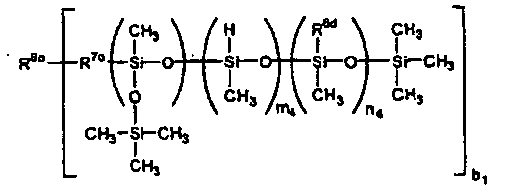

wherein 1≤m₄+n₄≤50, 1≤m₄, and 0≤n₄, R^{6d} is a hydrocarbon group having 2 to 20 carbon atoms in the main chain thereof, optionally having one or more phenyl groups, 2≤b₁, R^{8a} is a divalent to tetravalent organic group, and R^{7a} is a divalent organic group, but R^{7a} may be absent depending on the structure of R^{8a},

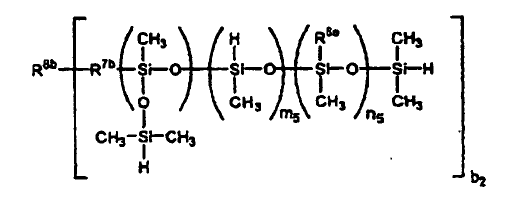

wherein 0≤m₅+n₅≤50, 0≤m₅, and 0≤n₅, R₆ₑ is a hydrocarbon group having 2 to 20 carbon atoms in the main chain thereof, optionally having one or more phenyl groups, 2≤b₂, R^{8b} is a divalent to tetravalent organic group, and R^{7b} is a divalent organic group, however, R^{7b} may be absent depending on the structure of R^{8b}, or

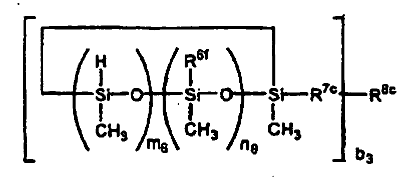

wherein 3≤m₆+n₆≤50, 1≤m₆, and 0≤n₆, R^{6f} is a hydrocarbon group having 2 to 20 carbon atoms in the main chain thereof, optionally comprising one or more phenyl groups, 2≤b₃, R^{8c} is a divalent to tetravalent organic group, and R^{7c} is a divalent organic group, however, R^{7c} may be absent depending on the structure of R^{8c}, and the like.

The "compound containing two or more hydrosilyl groups on average in each molecule" for component B preferably has good compatibility with the component A and the component C, or good dispersion stability in the system. Particularly, if the viscosity of the entire system is low, use of an ingredient whose compatibility with any of the above-described ingredients is low as the component B sometimes causes phase separation and a curing failure.

As a specific example of the component B having relatively good compatibility with the component A and the component C, or relatively good dispersion stability, the following can be included.

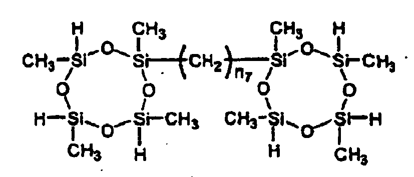

wherein n₇ is an integer of not less than 4 and not more than 10,

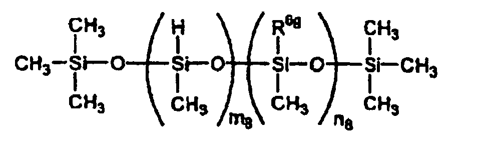

wherein 25≤m₈≤10 and 0≤n₈≤5, R^{6g} is a hydrocarbon group having eight or more carbon atoms.

As specific preferable examples of the component B, polymethylhydrogen siloxane can be included; for assuring compatibility with the component A and adjusting the SiH content, a compound modified with α-olefin, styrene, α-methylstyrene, allylalkyl ether, allylalkyl ester, allylphenyl ether, allylphenyl ester or the like can be included; as an example,
the following structure can be included.

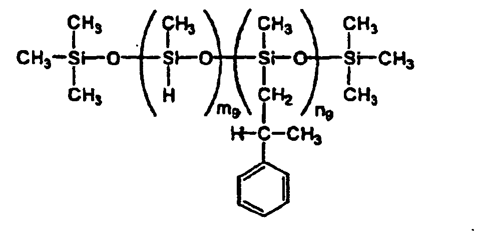

wherein 2≤m₉≤20 and 1≤n₉≤20.

The component B can be synthesized by a commonly known method, and any commercially available product can be used as is.

In the present invention, the component C "hydrosilylation catalyst" is not subject to limitation; an optionally chosen one can be used. As specific examples, chloroplatinic acid; platinum; solid platinum carried by a carrier such as alumina, silica, or carbon black; a platinum-vinylsiloxane complex {for example, Ptₙ(ViMe₂SiOSiMe₂Vi)ₘ, Pt[(MeViSiO)₄]ₘ and the like}; a platinum-phosphine complex {for example, Pt(PPh₃)₄, Pt(PBu₃)₄ and the like}; a platinum-phosphite complex {for example, Pt[P(OPh)₃]₄, Pt[P(OBu)₃]₄ and the like}; Pt(acac)₂; the platinum-hydrocarbon conjugates described in US Patent 3159601 and 3159662 of Ashby et al.; the platinum alcoholate catalyst described in US Patent 3220972 of Lamoreaux et al. and the like can be included. (In the formulas above, Me represents a methyl group, Bu represents a butyl group, Vi represents a vinyl group, Ph represents a phenyl group, acac represents an acetylacetonate, and each of n and m represents an integer.)

As examples of catalysts other than platinum compounds, RhCl(PPh₃)₃, RhCl₃, Rh/Al₂O₃, RuCl₃, IrCl₃, FeCl₃, AlCk₃, PdCl₂ • 2H₂O, NiCl₂, TiCl₄ and the like can be included.
These catalysts may be used alone, and may be used in combination of 2 kinds or more. With regard to catalyst activity, chloroplatinic acid, a platinum-phosphine complex, a platinum-vinylsiloxane complex, Pt(acac)₂ and the like are preferable.

Although the amount of the component C formulated is not subject to limitation, from the viewpoint of assurance of composition potlife and transparency of the cured product (adhesive layer), the amount is generally not more than 1x10⁻¹ mol, preferably not more than 5.3x10⁻² mol, relative to 1 mol of alkenyl groups in the component A; particularly, from the viewpoint of transparency of the cured product (adhesive layer), the amount is more preferably not more than 3.5x10⁻² mol, particularly preferably not more than 1.4x10⁻³ mol. When the amount exceeds 1x10⁻¹ mol relative to 1 mol of alkenyl groups in the component A, the finally obtained cured product (adhesive layer) is likely to undergo yellowing and the transparency of the cured product (adhesive layer) tends to be damaged. When the amount of the component C formulated is too low, the composition curing speed is slow, and the curing quality tends to be unstable; therefore, the amount is preferably not less than 8.9x10⁻⁵ mol, more preferably not less than 1.8x10⁻⁴ mol.

The composition comprising the above-described components A to C is cured by heating. That is, the alkenyl group of component A (polyoxyalkylene polymer having at least one alkenyl group in each molecule) is hydrosilylated by the hydrosilyl group (group having Si-H bond) of component B (compound containing two or more hydrosilyl groups on average in each molecule) in the presence of a hydrosilylation catalyst (component C) to allow crosslinking to proceed, whereby curing is completed. The cured product is characterized by the ability to exhibit its tacky characteristic (function to adhere to other object) even without addition, or with addition of a small amount, of an adhesiveness-imparting resin. It has low activity, and does not react upon contact with various substances such as water, metal, plastic material and the like.

In a composition comprising components A to C, it is preferable that the hydrosilyl groups of the component B (compound B) be contained (formulated) so that the functional group ratio to the alkenyl groups of the component A (compound A) will be not less than 0.3 and less than 2, more preferably not less than 0.4 and less than 1.8, and still more preferably not less than 0.5 and less than 1.5. When the hydrosilyl groups are contained so that the foregoing functional group ratio will exceed 2, the crosslinking density increases, and it is sometimes impossible to obtain adhesiveness without the addition, or with the addition of a small amount, of an adhesiveness-imparting resin. When the functional group ratio is less than 0.3, crosslinking in the cured product becomes too weak, and retention of characteristics at high temperatures may become difficult. Hence, by setting a blending ratio of the component A and the component B to fall within a particular range, good adhesiveness composition can be achieved even without adding an adhesiveness-imparting resin and, in addition, the composition can be cured at a practically sufficiently fast line speed.

A composition comprising the,components A to C may be formulated with a storage stability improving agent for the purpose of improving the storage stability. As this storage stability improving agent, a commonly known compound known as a storage stabilizer for the component B of the present invention can be used without limitation. For example, a compound comprising an aliphatic unsaturated bond, an organic phosphorus compound, an organic sulfur compound, a nitrogen-containing compound, a tin compound, an organic peroxide and the like can be suitably used. Specifically, 2-benzothiazolyl sulfide, benzothiazole, thiazole, dimethylacetylene dicarboxylate, diethylacetylene dicarboxylate, 2,6-di-t-butyl-4-methylphenol, butylhydroxyanisole, vitamin E, 2-(4-morpholinyldithio)benzothiazole, 3-methyl-1-butene-3-ol, 2-methyl-3-butene-2-ol, organosiloxane containing an acetylenic unsaturated group, acetylene alcohol, 3-methyl-1-butyl-3-ol, diallyl fumarate, diallyl maleate, diethyl fumarate, diethyl maleate, dimethyl maleate, 2-pentenenitrile, 2,3-dichloropropene and the like can be included, but these are not to be construed as limiting.

An adhesion-imparting agent for further improving the adhesion property to the substrate sheet 1 can be added to the composition comprising the components A to C as required. As examples of the adhesion-imparting agent, various silane coupling agents, epoxy resins and the like can be included. In particular, a silane coupling agent having a functional group such as an epoxy group, a methacryloyl group, or a vinyl group is preferable because its influence on the curing quality is small and also because it is highly effective for the manifestation of adhesiveness. In combination with a silane coupling agent and an epoxy resin, a catalyst for reacting silyl groups or epoxy groups can be added. When using them, their influence on the hydrosilylation reaction must be taken into consideration. Various filling agents, antioxidants, UV absorbents, pigments, surfactants, solvents, and silicone compounds may be added to the composition as appropriate. As specific examples of the above-described filling agents, silica micropowder, calcium carbonate, clay, talc, titanium oxide, zinc oxide, diatomaceous earth, barium sulfate and the like can be included. Of these filling agents, silica micropowder, particularly micropowder silica having a particle diameter of about 50 to 70 nm (the BET specific surface area is 50 to 380 m²/g) is preferable; in particular, surface-treated hydrophobic silica is particularly preferable because of its high function to improve the strength in the preferred direction. Furthermore, a tackifier resin may be added to the composition as required to enhance the tack and other characteristics thereof; as examples of the tackifier resin, terpene resin, terpene phenol resin, petroleum resin, rosin ester and the like can be included, one of which can be freely selected according to the intended use.

For the characteristic improvements, resins such as phenol resin, acrylic resin, styrene resin, and xylene resin can be added. An adhesive ingredient such as an acrylic adhesive, a styrene block-series adhesive, or an olefin-series adhesive can be added for the same purpose.

As the substrate sheet 1 to be used for the gasket material of the present invention, sheets (films) made from various materials and having various forms can be used and they are not particularly limited. For example, a film (a single layer film) comprised of one or more kinds of plastic selected from polyester (e.g., poly(ethylene terephthalate) (PET) etc.); nylon; polyvinyl chloride; polyvinyldene chloride; polyolefin such as polyethylene, polypropylene, reactor TPO, ethylene-vinyl acetate copolymer and the like; polytetrafluoroethylene and ionomer resin and the like, a metal foil, a laminate film wherein two or more selected therefrom are laminated and the like can be employed. These films may be used in the form of a solid film (non-porous film), or a perforated film with mechanical perforation. Also, fiber sheet (single layer sheet, laminate sheet having two or more layers) such as knitted fabric, woven fabric, non-woven fabric and the like using one or more kinds of fibers selected from synthesis polymer fiber such as polyesters (e.g., poly(ethylene terephthalate) (PET) and the like) and the like, natural fibers such as cotton, hemp and the like, metal fiber and glass fiber, and a laminate sheet wherein one or more kinds of such fiber sheets are laminated on the aforementioned plastic film can also be used as the substrate sheet 1.

Among these, one having less open pores allowing passage of moister is preferable from the aspects of anti-moisture permeability (moisture barrier property), and a non-porous plastic film is particularly preferable. The plastic film preferably has transparency from the aspects of workability. When a bolt penetrating a gasket material is fastened after setting of the gasket material, or the like, a glass fiber sheet (particularly, glass cloth) is preferably used as a substrate sheet, from the aspects of workability during fastening of bolt, imparting strength for removal and the like. In addition, the fabric weight of the glass fiber sheet is preferably 5 - 1000 g/m² from the aspects of strength and transparency, and the thickness (diameter) of the glass fiber is preferably about 0.01 - 1 mm. When a glass cloth is used, it may be in the form of plain weave, satin weave, twill weave, mat weave and the like. Moreover, a glass cloth can show improved adhesiveness to an adhesive layer by applying a surface treatment with a silane coupling agent.

While the thickness of substrate sheet 1 varies depending on the material, form and the like of the sheet, it is generally 2 - 1000 µm, preferably 5 - 500 µm, most preferably 5 - 200 µm.

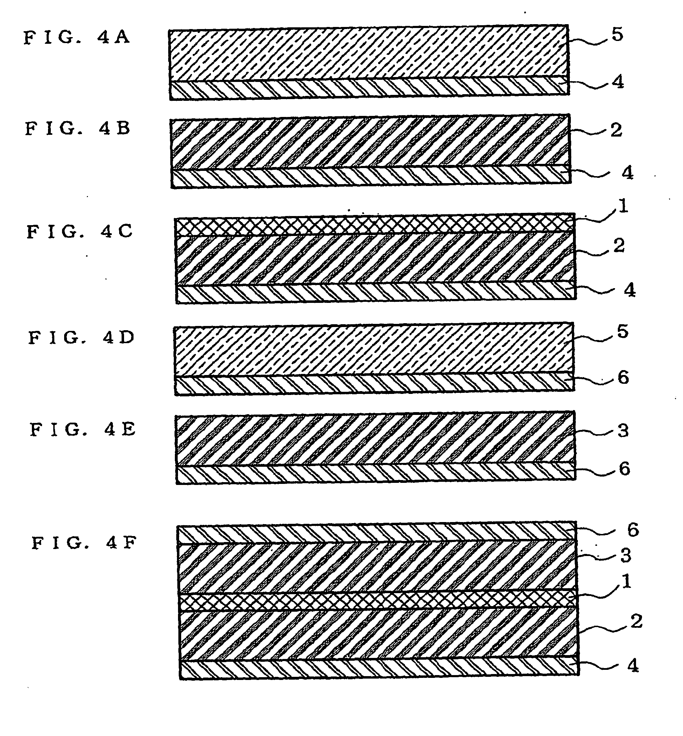

As shown in Fig. 2, a gasket material 110 of the present invention prior to installation between two opposing faces is preferably constituted as an adhesive tape-like roll 200 wherein a release sheet 4 is laminated on at least one of the adhesive layers 2 and 3 formed on both surfaces of the substrate sheet 1 (Fig. 3). The roll 200 is produced, for example, by the method shown in the following. Fig. 4A-4F each shows a sectional view of each step of such production method.
(1) First, ingredients A to C, along with an organic solvent as required, are charged in a stirrer with vacuum function and stirred and hence defoamed in a vacuum (under vacuum conditions) to give a defoamed mixture (composition).
(2) Then, a composition (mixture) 5 after the defoaming treatment and containing components A - C is applied to (cast on) one surface of a release sheet 4 with both surfaces subjected to a release treatment to a predetermined thickness (Fig. 4A), the sheet is subjected to a given heat treatment to cure the composition (mixture) 5 containing components A - C, whereby an adhesive layer 2 is formed with the cured product (Fig. 4B). The curing reaction is completed since the alkenyl group of component A (polyoxyalkylene polymer having at least one alkenyl group in each molecule) is hydrosilylated by the hydrosilyl group (group having Si-H bond) of component B (compound containing two or more hydrosilyl groups on average in each molecule) in the presence of a hydrosilylation catalyst (component C) to allow crosslinking to proceed.
(3) Next, the substrate sheet 1 is laminated on the surface of the adhesive layer 2 formed with the cured product (Fig. 4C)).
(4) A release sheet 6 is prepared separately and, in the same manner as in (2), the composition (mixture) 5 after the defoaming treatment and containing components A - C is applied to (cast on) the release sheet 6 to a predetermined thickness (Fig. 4D), the sheet is subjected to a given heat treatment to cure the composition (mixture) 5 containing components A - C, whereby an adhesive layer 3 is formed with the cured product (Fig. 4E). The obtained adhesive layer 3 is laminated on the other surface of the substrate sheet 1 (Fig. 4F), which is free of an adhesive layer, and the release sheet 6 is removed (Fig. 3), after which the sheet is wound in a roll (Fig. 2).

The mixture can be applied to the release sheet using, for example, a commonly known coating apparatus such as a gravure coater; a roll coater such as a kiss coater or a comma coater; a die coater such as a slot coater or a fountain coater; a squeeze coater, a curtain coater and the like. Regarding the heat treatment conditions in this case, it is preferable that the composition be heated at 50 to 200°C (preferably 100 to 160°C) for about 0.01 to 24 hours (preferably 0.05 to 4 hours). As the above-described stirrer with vacuum function, a commonly known stirrer equipped with vacuum apparatus may be used; specifically, a planetary (revolution type/rotation type) stirring defoaming apparatus, a defoaming apparatus equipped with a disperser, and the like can be included. The degree of pressure reduction in performing vacuum defoaming is preferably not more than 10 kPa, more preferably not more than 3 kPa. Stirring time varies also depending on the choice of stirrer and the throughput of fluidized product, and is generally preferably about 0.5 to 2 hours. Due to the defoaming treatment, the resulting adhesive layer is substantially free of a void, and high transparency can be achieved.

The gasket material of the present invention may have not only a constitution wherein a release sheet is laminated on only one of the adhesive layers formed on both surfaces of a substrate sheet such as the one mentioned above, but a roll wherein a release sheet is laminated on both adhesive layers formed on both surfaces of a substrate sheet.

Examples of the release sheet include single layer films (sheets) made of thermoplastic resins such as polyester (e.g., poly(ethylene terephthalate) (PET), polybutylene terephthalate (PBT) and the like), ionomer resin wherein molecules of ethylene-methacrylic acid copolymer are crosslinked with metal ion (Na⁺, Zn²⁺ etc.), EVA (ethylene-vinyl acetate copolymer), PVC (polyvinyl chloride), EEA (ethylene-ethylacrylate copolymer), PE (polyethylene), PP (polypropylene), polyamide, polybutyral, polystyrene and the like; various thermoplastic elastomers showing rubber elasticity such as polystyrene elastomer, polyolefin elastomer, polydiene elastomer, polyvinyl chloride elastomer, polyurethane elastomer, polyester elastomer, polyamide elastomer, fluorine-containing elastomer, chlorinated polyethylene elastomer, polynorbornane elastomer, styrene-olefin elastomer, (hydrogenated) styrene-butadiene elastomer, styrene-isoprene elastomer and the like; polyolefin such as polyethylene, polypropylene and the like blended with a thermoplastic elastomer and the like, which underwent a release treatment of one surface thereof, films (sheets) having multiple layers (laminate) made of polyolefin (polypropylene (PP) or polyethylene (PE) etc.)/thermoplastic resin (e.g., EVA)/polyolefin, polyolefin (PP or PE) + thermoplastic elastomer/polyolefin (PP or PE), PP/PE/PP and the like, multilayer (laminate) of composite polyolefin+thermoplastic elastomer with varying blending ratios, etc., which underwent a release treatment of one surface thereof, and the like. In addition, impregnated paper, coated paper, quality paper, craft paper, cloth, acetate cloth, non-woven fabric, glass cloth and the like, which underwent a release treatment of one surface thereof can be used.

Examples of the release agent include silicone type release treatment agent, fluoride type release treatment agent, long chain alkyl type release treatment agent etc. can be applied to the support surface. Of these, a silicone type release treatment agent is preferable. As the curing method, a curing method such as UV irradiation, electron beam irradiation and the like are preferably used. Furthermore, of the silicone type release treatment agents, a cation polymerizable UV curing silicone type release treatment agent is preferable. A cation polymerizable UV curing silicone type release treatment agent is a mixture of a cation polymerizable silicone (polyorganosiloxane having an epoxy functional group in a molecule) and an onium salt photoinitiator. Such agent wherein the onium salt photoinitiator is a boron photoinitiator is particularly preferable. Using such a cation polymerizable UV curing silicone type release treatment agent wherein the onium salt photoinitiator is a boron photoinitiator, particularly good releaseability (mold releaseability) can be obtained. A cation polymerizable silicone (polyorganosiloxane having an epoxy functional group in a molecule) has at least two epoxy functional groups in one molecule, which may be linear or branched chain, or a mixture of these. While the kind of an epoxy functional group contained in polyorganosiloxane is not particularly limited, it only needs to permit progress of cationic ring-opening polymerization by an onium salt photoinitiator. Specific examples thereof include γ-glycidyloxypropyl group, β-(3,4-epoxycyclohexyl)ethyl group, β-(4-methyl-3,4-epoxycyclohexyl)propyl group and the like. Such cation polymerizable silicone (polyorganosiloxane having an epoxy functional group in a molecule) is marketed and a commercially available product can be used. For example, UV9315, UV9430, UV9300, TPR6500, TPR6501 and the like manufactured by Toshiba Silicone Co., Ltd., X-62-7622, X-62-7629, X-62-7655, X-62-7660, X-62-7634A and the like manufactured by Shin-Etsu Chemical Co., Ltd., Poly200, Poly201, RCA200, RCA250, RCA251 and the like manufactured by Arakawa Chemical Industries, Ltd.

Of the cationic polymerizable silicones, polyorganosiloxane comprising the following structural units (A) - (C) is particularly preferable. 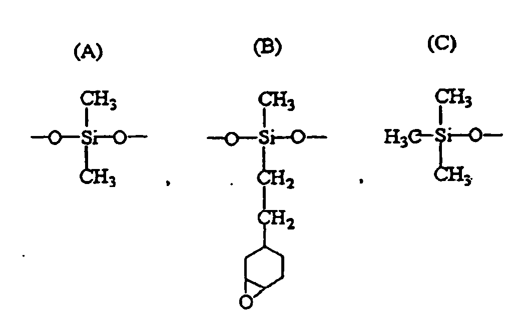 In polyorganosiloxane comprising such structural units (A) - (C), the composition ratio ((A):(B):(C)) of structural units (A) - (C) is particularly preferably 50 - 95:2 - 30:1 - 30 (mol%), and especially preferably 50 - 90:2 - 20:2 - 20 (mol%). Polyorganosiloxane comprising such structural units (A) - (C) is available as Poly200, Poly201, RCA200, X-62-7622, X-62-7629 and X-62-7660.

On the other hand, as the onium salt photoinitiator, a known product can be used without particular limitation. Specific examples include a compound represented by (R¹)₂I⁺X⁻, ArN₂⁺X⁻ or (R¹)₃S⁺X⁻ (wherein R¹ is alkyl group and/or aryl group, Ar is aryl group, X⁻ is [B(C₆H₅)₄]⁻, [B(C₆F₅)₄]⁻, (B(C₆H₄CF₃)₄]⁻, [(C₆F₅)₂BF₂]⁻, [C₆F₅BF₃]⁻, (B(C₆H₃F₂)₄]⁻, BF₄⁻, PF₆⁻, AsF₆⁻, HSO₄⁻, ClO₄⁻ and the like). Of these, a compound of the formula (boron photoinitiator) wherein X⁻ is [B(C₆H₅)₄]⁻, [B(C₆F₅)₄]⁻, [B(C₆H₄CF₃)₄]⁻, [(C₆F₅)₂BF₂]⁻, [C₆F₅BF₃]⁻, [B(C₆H₃F₂)₄]⁻ or BF₄⁻ is preferable, and a compound represented by (R¹)₂I⁺[B(C₆F₅)₄]⁻ (wherein R¹ is substituted or unsubstituted phenyl group) (alkyl iodonium, tetrakis(pentafluorophenyl)borate) is particularly preferable. As the onium salt photoinitiator, antimony (Sb) initiator is conventionally known. However, when an antimony (Sb) initiator is used, peal strength becomes heavier and peeling of transparent adhesive sheet from release sheet tends to be difficult.

While the amount of the onium salt photoinitiator to be used is not particularly limited, it is preferably about 0.1 - 10 parts by weight relative to 100 parts by weight of the cationic polymerizable silicone (polyorganosiloxan). When the amount of use is smaller than 0.1 part by weight, curing of the silicone release layer may become insufficient. When the amount of use is greater than 10 parts by weight, the cost becomes impractical. When a cationic polymerizable silicone (polyorganosiloxan) and an onium salt photoinitiator are mixed, the onium salt photoinitiator may be dissolved or dispersed in an organic solvent and then mixed with polyorganosiloxan. Specific examples of the organic solvent include alcohol solvents such as isopropyl alcohol, n-butanol and the like; ketone solvents such as acetone, methylethyl ketone and the like; ester solvents such as ethyl acetate, and the like, and the like.

A release treatment agent can be applied, for example, using a general coating apparatus such as those used for roll coater method, reverse coater method, doctor blade method and the like. While the coating amount (solid content) of the release treatment agent is not particularly limited, it is generally about 0.05 - 6 mg/cm²_{.}

In the gasket material of the present invention, while the thickness of the adhesive layers 2, 3 to be formed on both surfaces of the substrate sheet 1 is not particularly limited, it is preferably not less than 50 µm, particularly preferably not less than 500 µm, for both the adhesive layers 2, 3, from the aspects of handling property and anti-moisture permeability (moisture barrier property). When the thickness is too high, the handling property tends to be degraded. Thus, the upper limit thereof is preferably not more than 1000 µm, more preferably not more than 800 µm.

The adhesive layers 2, 3 in the gasket material of the present invention are superior in elasticity and compaction property and have high transparency. They are advantageous in that positioning is easy when the gasket material is sandwiched between given two opposing faces in machines and apparatus, since the surface to which the adhesive layer (sealing surface) adheres can be confirmed through the gasket material.

While the adhesion force of the gasket material of the present invention is not particularly limited, when the below-mentioned adherend is a SUS plate, the initial adhesion force is preferably not less than 2N/25 mm from the aspects of sealing property.

After the gasket material of the present invention is sandwiched between two opposing faces, the two opposing faces are joined without clearance, whereby superior sealing property can be retained and superior removability can be realized without leaving the adhesive layer on the adherend when the gasket material is removed for maintenance and the like.
In addition, after the gasket material is placed between the two opposing faces, the adhesion force of the adhesive layers 2, 3 is improved, and the gasket material provides a seal of the two opposing faces and retains superior sealing property.

The adhesive layers 2, 3 in the gasket material of the present invention have a shear storage modulus (G') at -30°C of not more than 6.0×10⁵(Pa), preferably not more than 5.5×10⁵(Pa). The shear storage modulus (G') is known as an index of the hardness of a viscoelastic body. Since the adhesive layer in the gasket material of the present invention has a shear storage modulus (G') at -30°C of not more than 6.0×10⁵(Pa) and does not become rigid at low temperatures, it is considered to maintain high flexibility even at a temperature below zero. In consideration of the time-temperature reduction rule, a high-speed deformation at a certain temperature is influenced by the property of a viscoelastic body at a lower temperature. Therefore, the discussion of an adhesive force at -30°C should take into consideration viscoelastic behavior at a lower temperature. The adhesive layers 2, 3 in the gasket material of the present invention also have a shear storage modulus at -50°C of not more than 6.0×10⁵. Therefore, the adhesion stability at a lower temperature is considered to be highly superior. The "shear storage modulus (G')" here is measured by the following method.

### [Shear storage modulus (G')]

Plural samples are prepared by forming an adhesive layer on a release-treated surface of a release sheet, and the obtained adhesive layers are adhered to each other to give a laminate having a thickness of about 0.5 - 1 mm. The laminate is cut into a disc having a diameter of 7.9 mm and used as a sample for the measurement using the following apparatus and conditions.
measurement apparatus: ARES manufactured by Rheometric Scientific Inc.
measurement condition: measurement temperature -30°C and -50°C
measurement frequency 1Hz (6.28 rad/sec)

The gasket material of the present invention can be used for sealing two opposing faces in machines, apparatuses and structures in various technical fields. For example, it can be used for sealing in aircrafts, automobiles, trains and the like (e.g., sealing the mounting part of various apparatuses and equipment such as body of airplanes, outer board (body) of vehicles etc.), sealing in constructions such as houses, buildings and the like, and the like.

### Examples

The present invention is explained in more detail in the following by referring to Examples. The property evaluation (test) of the gasket material in the Examples was performed according to the following method.

### [Property evaluation]

### 1. Initial adhesion force to SUS

A 25 µm-thick PET film was laminated on the adhesive layer on one surface of the gasket material obtained in Example, which was cut into 25 mm width to give samples. The other adhesive layer of the sample was adhered to a SUS304 plate by one reciprocation of a 2 kg roller, and the laminate was stood at room temperature for 30 min. Using a tensile tester, the initial adhesion force was measured at tension rate 300 mm/min, removal angle 180°.

### 2. Removability

A 25 µm-thick PET film was laminated on the adhesive layer on one surface of the gasket material obtained in Example, which was cut into 25 mm width to give samples. The other adhesive layer of the sample was adhered to a SUS304 plate by one reciprocation of a 2 kg roller, and the laminate was stood in the environment of temperature: 23°C, humidity: 65% RH for 240 hr, after which the destruction state of the gasket material was observed by manually removing the sample from the SUS plate. The gasket material removed at the interface with the adherend without destruction was marked with O, and the gasket material destructed leaving the residue of the adhesive layer on the adherend was marked with x.

### (Example 1)

A composition containing a polyoxyalkylene polymer for component (A), a hydrosilyl compound for component B in an amount that affords a functional group ratio (molar ratio) of 0.58, and a hydrosilylation catalyst for component C were applied to the surface of a poly(ethylene terephthalate) film release sheet, and the sheet was heat-treated to give a 500 µm-thick adhesive layer. The aforementioned adhesive layer was laminated on both surfaces of a glass cloth as a substrate sheet to give a gasket material.

### (Example 2)

A composition containing a polyoxyalkylene polymer for component (A), a hydrosilyl compound for component B in an amount that affords a functional group ratio (molar ratio) of 0.65, and a hydrosilylation catalyst for component C were applied to the surface of a poly(ethylene terephthalate) film release sheet, and the sheet was heat-treated to give a 800 µm-thick adhesive layer. The aforementioned adhesive layer was laminated on both surfaces of a 60 µm-thick polyolefin film (reactor TPO) as a substrate sheet to give a gasket material.

**Table 1**

| | Example 1 | Example 2 |
|---|---|---|
| initial adhesion force | 2.6 N/25 mm | 4.3 N/25 mm |
| removability | ○ | ○ |

As is clear from Table 1, the gasket materials of Example 1 and Example 2 were both superior in the adhesiveness and removability.

## Claims

1. A gasket material comprising a substrate sheet and an adhesive layer formed on both faces of said sheet, wherein said adhesive layer comprises a cured product of a composition containing the following components A to C:
A: a polyoxyalkylene polymer having at least one alkenyl group in each molecule
B: a compound containing two or more hydrosilyl groups on average in each molecule
C: a hydrosilylation catalyst.

2. A gasket material according to claim 1, wherein the substrate sheet is a glass fiber sheet.

3. A gasket material according to claim 2, wherein the glass fiber sheet is a glass cloth.

4. A gasket material according to claim 1, wherein the substrate sheet is a plastic film.

5. A gasket material according to claim 1, wherein the substrate sheet is a non-porous plastic film.

6. A gasket material according to any one of the preceding claims, further comprising a release sheet laminated on at least one of the adhesive layers formed on both faces of the substrate sheet.

7. A gasket material according to claim 6, wherein the release sheet is treated with a cation polymerizable ultraviolet curable silicone release agent containing cation polymerizable silicone and an onium salt photoinitiator.

8. A gasket material according to any one of claims 1 to 5, which is placed between two opposing faces.

9. A seal structure comprising a gasket material according to any one of claims 1 to 5 placed between two opposing faces.

## Patentansprüche

1. Dichtungsmaterial, umfassend ein Substratflächengebilde und eine auf beiden Seiten des Flächengebildes gebildete Kleberschicht, wobei die Kleberschicht ein gehärtetes Produkt einer Zusammensetzung umfasst, die die folgenden Komponenten A bis C enthält:
A: ein Polyoxyalkylen-Polymer, das in jedem Molekül wenigstens eine Alkenylgruppe aufweist;
B: eine Verbindung, die in jedem Molekül im Durchschnitt zwei oder mehr Hydrosilylgruppen enthält;
C: einen Hydrosilylierungskatalysator.

2. Dichtungsmaterial gemäß Anspruch 1, wobei das Substratflächengebilde eine Glasfasermatte ist.

3. Dichtungsmaterial gemäß Anspruch 2, wobei die Glasfasermatte ein Glasfasergewebe ist.

4. Dichtungsmaterial gemäß Anspruch 1, wobei das Substratflächengebilde eine Kunststofffolie ist.

5. Dichtungsmaterial gemäß Anspruch 1, wobei das Substratflächengebilde eine nichtporöse Kunststofffolie ist.

6. Dichtungsmaterial gemäß einem der vorstehenden Ansprüche, das weiterhin eine abziehbare Folie umfasst, die auf wenigstens eine der auf beiden Seiten des Flächengebildes gebildeten Kleberschichten laminiert ist.

7. Dichtungsmaterial gemäß Anspruch 6, wobei die abziehbare Folie mit einem kationisch polymerisierbaren, UV-härtbaren Silikon-Trennmittel, das kationisch polymerisierbares Silikon und einen Oniumsalz-Photoinitiator enthält, behandelt ist.

8. Dichtungsmaterial gemäß einem der Ansprüche 1 bis 5, das sich zwischen zwei einander gegenüberliegenden Flächen befindet.

9. Dichtungsstruktur, die ein Dichtungsmaterial gemäß einem der Ansprüche 1 bis 5 umfasst, das sich zwischen zwei einander gegenüberliegenden Flächen befindet.

## Revendications

1. Matériau de joint comprenant une feuille substrat et une couche adhésive formée sur les deux faces de ladite feuille, dans lequel ladite couche adhésive comprend un produit réticulé d'une composition contenant les composants suivants A à C:
A : un polymère de polyoxyalkylène ayant au moins un groupe alcényle dans chaque molécule
B : un composé contenant deux groupes hydro-silyles ou plus, en moyenne, dans chaque molécule
C : un catalyseur d'hydrosilylation.

2. Matériau de joint selon la revendication 1, dans lequel la feuille substrat est une feuille de fibres de verre.

3. Matériau de joint selon la revendication 2, dans lequel la feuille de fibres de verre est un tissu de verre.

4. Matériau de joint selon la revendication 1, dans lequel la feuille substrat est un film plastique.

5. Matériau de joint selon la revendication 1, dans lequel la feuille substrat est un film plastique non poreux.

6. Matériau de joint selon l'une quelconque des revendications précédentes, comprenant en outre une feuille détachable stratifiée sur au moins une des couches adhésives formées sur les deux faces de la feuille substrat.

7. Matériau de joint selon la revendication 6, dans lequel la feuille détachable est traitée avec un agent de détachement en silicone réticulable par rayonnement ultraviolet et polymérisable par voie cationique contenant une silicone polymérisable par voie cationique et un photo-initiateur de sel d'onium.

8. Matériau de joint selon l'une quelconque des revendications 1 à 5, qui est placé entre deux faces opposées.

9. Structure d'étanchéité comprenant un matériau de joint selon l'une quelconque des revendications 1 à 5, placé entre deux faces opposées.
